# FASCICULE DE BREVET EUROPEEN

(11) **EP 2 671 275 B1**
(45) Date de publication et mention de la délivrance du brevet: **06.09.2017**
(21) Numéro de dépôt: 12707845.9
(22) Date de dépôt: 01.02.2012
(51) Int. Cl.: H01M 8/02

(54) **PLAQUE COLLECTRICE DE COURANT COMPORTANT DES PERÇAGES HORIZONTAUX POUR PILE À COMBUSTIBLE**
STROMSAMMLER MIT HORIZONTALEN BOHRUNGEN FÜR BRENNSTOFFZELLE
CURRENT COLLECTOR COMPRISING HORIZONTAL BORES FOR FUEL CELL

(30) Priorité: 02.02.2011 FR 1150827
(43) Date de publication de la demande: 11.12.2013
(73) Titulaire: PSA Automobiles SA, 78300 Poissy (FR)
(72) Inventeur: GLIPA, Xavier, F-78480 Verneuil Sur Seine (FR); ROY, Francis, F-91940 Les Ulis (FR); PINTON, Eric, F-38130 Echirolles (FR); SCHOTT, Pascal, F-38250 Villard De Lans (FR); BEGOT, Sylvie, F-90330 Chaux (FR); HAREL, Fabien, F-90200 Giromagny (FR); LE CANUT, Jean-Marc, F-90000 Belfort (FR)
(74) Mandataire: Ménès, Catherine
(86) Numéro de dépôt international: PCT/FR2012/050223
(87) Numéro de publication internationale: WO 2012/104555

(56) Documents cités:
- DE-A1-102009 018 527
- FR-A1- 2 799 308
- FR-A1- 2 887 691
- JP-A- 61 230 273
- US-A1- 2004 161 659

## Description

La présente invention concerne une pile à combustible équipée de plaques collectrices, ainsi qu'un véhicule automobile et un groupe électrogène comprenant cette pile à combustible.

Les piles à combustible sont développées aujourd'hui en particulier pour équiper des véhicules en remplacement des moteurs thermiques, elles permettent en produisant de l'électricité utilisée par une machine électrique de traction, d'obtenir un meilleur rendement énergétique que celui des moteurs thermiques.

Les piles à combustible comportent généralement un empilement de cellules élémentaires comprenant chacune deux électrodes séparées par un électrolyte, et des plaques conductrices qui apportent le carburant et le comburant aux électrodes par des canaux internes. Les réactions électrochimiques qui se réalisent au contact des électrodes génèrent un courant électrique, et produisent de l'eau tout en dégageant une énergie calorifique qui échauffe les différents composants.

Pour fonctionner correctement, les piles à combustible doivent se trouver à une certaine température, comprise suivant le type entre 20 et 800°C. La chaleur dégagée par le démarrage des réactions quand la pile est froide, sert d'abord à échauffer les cellules pour les amener à la température de fonctionnement souhaitée. Ensuite, un circuit de fluide caloporteur régule cette température.

Un problème qui se pose dans le cas d'un démarrage de la pile à combustible comportant une température basse qui est inférieure à 0°C, est que l'eau produite par les réactions électrochimiques risque de geler tant que cette température se trouve en dessous de ce seuil de 0°C. La pile à combustible ne peut pas alors plus fonctionner correctement, et risque d'être détruite.

L'empilement des cellules est généralement encadré de chaque côté, par une plaque collectrice de courant comportant une borne de connexion du courant, et par une plaque de serrage d'extrémité qui est rigide pour pouvoir serrer axialement l'empilement des cellules, en répartissant la pression sur la surface de ces cellules.

Un isolant électrique peut être interposé entre ces deux plaques dans le cas où la plaque de serrage est conductrice, pour l'isoler de la plaque collectrice.

On constate alors lors des démarrages à froid de la pile à combustible, que si les cellules centrales montent relativement vite en température, par auto-échauffement, les cellules de chaque extrémité montent nettement moins vite en température car la plaque collectrice qui est métallique, forme une masse thermique absorbant l'énergie calorifique générée par les réactions électrochimiques.

On a donc lors des démarrages à froid de la pile à combustible, des températures peu homogènes, et un risque plus important de gel de l'eau produite aux extrémités de l'empilement des cellules.

Pour remédier à ce problème, un type de plaque collectrice connu, présenté notamment dans le document US-A1-2004/0161659, comporte des séries de perçages réalisés perpendiculairement à la plaque, pour réduire la quantité de matière et la masse thermique de cette plaque collectrice.

Un problème qui se pose avec ce type de plaque collectrice, est que l'on obtient alors une répartition de la température de cette plaque, en particulier sur la surface de la plaque en contact avec la dernière cellule, qui n'est pas homogène, la température pouvant être élevée au niveau des perçages, et restant basse entre ces perçages.

De plus le courant n'est pas collecté au niveau des perçages, ce qui provoque une mauvaise distribution de la densité de courant et une baisse des performances.

La présente invention a notamment pour but d'éviter ces inconvénients de la technique antérieure, et de proposer une plaque collectrice comportant une masse thermique réduite, qui permet une répartition de température avantageuse.

Elle propose à cet effet une plaque collectrice de courant pour pile à combustible, comportant suivant l'axe d'empilement des cellules de cette pile, une épaisseur sensiblement constante d'un matériau électriquement conducteur, formant un plan qui vient à l'extrémité de cet empilement pour collecter le courant de la pile à combustible, caractérisée en ce qu'elle comporte des perçages réalisés dans l'épaisseur du matériau, parallèlement au plan de cette plaque.

Un avantage de cette plaque collectrice de courant, est que les perçages dans l'épaisseur constituent des évidements de matière réduisant sa masse thermique, tout en conservant une face en contact avec la dernière cellule qui reste continue, et maintient l'homogénéité de la température de cette cellule.

La plaque collectrice selon l'invention peut en outre comporter une ou plusieurs des caractéristiques suivantes, qui peuvent être combinées entre elles.

Avantageusement, les perçages sont parallèles entre eux.

Avantageusement, les perçages traversent la plaque dans son épaisseur de part en part.

Avantageusement, la plaque collectrice de courant comporte au moins dix perçages parallèles.

Selon un mode de réalisation, les perçages comportent une section rectangulaire sensiblement constante. La section rectangulaire constante des perçages, comporte suivant l'épaisseur de la plaque, une hauteur représentant environ 30 à 40% de cette épaisseur, et la largeur de ces perçages est sensiblement égale à la distance entre deux perçages.

En particulier, la plaque collectrice de courant peut comprendre un empilement dans l'épaisseur de plusieurs éléments, certains éléments comportant sur sa surface des évidements en forme de canaux, constituant les perçages après superposition.

En particulier, la plaque collectrice de courant peut comporter une borne de connexion centrale formant un axe perpendiculaire à cette plaque. Il est décrit un procédé de dimensionnement des perçages d'une plaque collectrice comportant l'une quelconque des caractéristiques précédentes, dans lequel pour une pile à combustible délivrant une densité de courant donnée, par exemple de 1A/cm², on maximise le volume de matière retiré de cette plaque en calculant une chute de tension maximale admissible, par exemple de 0,1 V, entre la borne de connexion de cette plaque, et un point quelconque de la plaque éloigné de cette borne.

L'invention a pour objet une pile à combustible disposant d'un empilement de cellules comprenant de part et d'autre une plaque collectrice de courant, ces plaques collectrices comportant l'une quelconque des caractéristiques précédentes.

L'invention a de plus pour objet un véhicule électrique comprenant une pile à combustible délivrant un courant électrique utilisé pour la traction, et un groupe électrogène comprenant une pile à combustible délivrant un courant électrique, ces piles comportant la caractéristique précédente.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue d'une extrémité de l'empilement d'une pile à combustible ;
- la figure 2 est une vue en perspective d'une plaque collectrice selon l'art antérieur ;
- la figure 3 est un graphique montrant sur une vue en coupe transversale de cette plaque collectrice équipée de sa plaque de serrage, la répartition de température lors d'un démarrage à froid ;
- la figure 4 est un autre graphique montrant cette répartition de température ;
- la figure 5 est une vue en perspective d'une plaque collectrice selon l'invention ;
- la figure 6 est un graphique montrant sur une vue en coupe transversale de cette plaque collectrice équipée de sa plaque de serrage, la répartition de température lors d'un démarrage à froid ; et
- la figure 7 est un autre graphique montrant cette répartition de température.

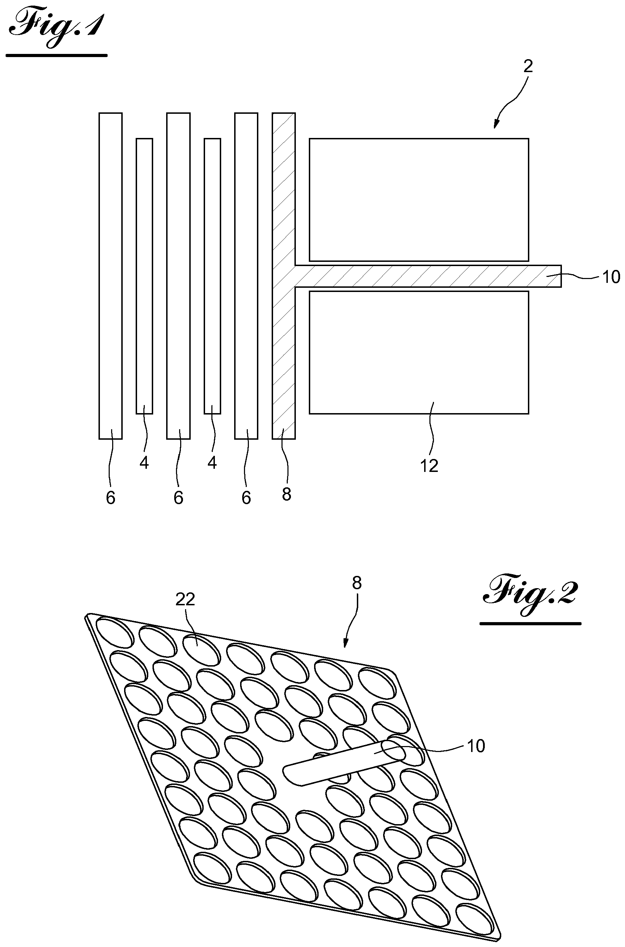

La figure 1 présente une extrémité de l'empilement d'une pile à combustible 2, comprenant une succession de cellules comportant chacune un ensemble 4 disposant de deux électrodes séparées par un électrolyte, encadré par des plaques conductrices dites « bipolaires » 6, qui conduisent le courant électrique d'une cellule à l'autre tout en apportant à ces cellules les réactifs nécessaires aux réactions électrochimiques.

La dernière plaque conductrice 6 qui est monopolaire, reçoit une plaque collectrice d'extrémité 8 comportant une borne de connexion centrale 10 formant un axe perpendiculaire, qui est relié à un conducteur électrique extérieur pour transmettre le courant généré par la pile à combustible 2.

La borne de connexion 10 traverse une plaque de serrage 12 isolante, épaisse et rigide, réalisée dans un matériau électriquement isolant comme une matière plastique, ou dans un métal recouvert d'un isolant, qui est soumise à un serrage axial pour serrer l'empilement des cellules.

La figure 2 détaille la plaque collectrice 8 réalisée dans un métal électriquement conducteur, formant un plan sensiblement carré et d'épaisseur constante, comprenant sur sa surface des perçages 22 répartis régulièrement sur des rangées parallèles.

La borne de connexion 10 forme un axe implanté au milieu de la plaque collectrice 8, dans une zone ne comportant pas de perçage 22. La plaque collectrice 8 collecte le courant électrique globalement sur l'ensemble de la surface de la dernière plaque monopolaire 6, pour le transmettre par sa borne de connexion 10.

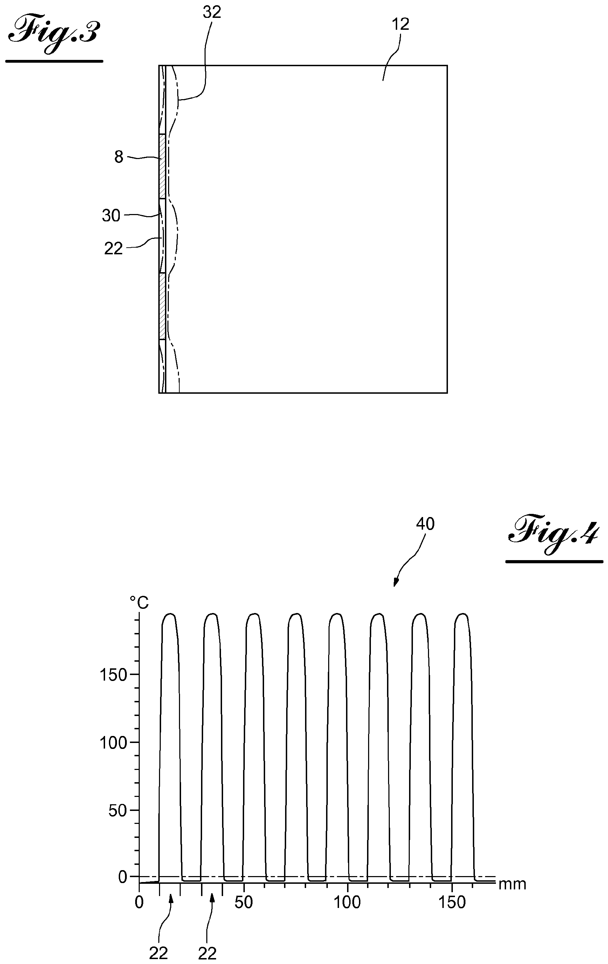

La figure 3 présente une coupe transversale partielle de la plaque collectrice 8 équipée de sa plaque de serrage 12 réalisée en polymère, sur laquelle une simulation de répartition de température a été effectuée. La coupe partielle est effectuée dans une zone éloignée des bords de la plaque collectrice 8 pour ne pas tenir compte des effets de bord, ces bords étant refroidis par convection naturelle avec l'air ambiant se trouvant à une température de -20°C.

La dernière cellule non représentée se trouvant sur le côté gauche de la plaque collectrice 8, est considérée comme étant une source de chaleur constante et homogène. La pile à combustible 2 vient de démarrer depuis 20 secondes, à partir d'une température de -20°C.

On a tracé sur la coupe deux lignes d'isotempérature, une première ligne 30 à environ 100°C, et une deuxième ligne 32 à environ 0°C. On constate que les creux des perçages 22 se trouvent à une température supérieure à 100°C, alors que quasiment toute la plaque collectrice 8 ainsi que la plaque de serrage 12, restent froides avec une température initiale de -20°C.

On peut en déduire que l'on obtiendra par conduction thermique due au contact entre la plaque collectrice 8 et la dernière cellule qui lui est accolée, une répartition de température sensiblement similaire sur cette cellule. Les perçages 22 contenant de l'air constituent en pratique un isolant qui maintient une température élevée sur la partie de la cellule se trouvant en face, alors que la matière de la plaque collectrice 8 constitue entre ces perçages, un puits de chaleur qui absorbe l'énergie thermique émise par cette cellule.

La figure 4 représente d'une autre manière cette répartition inégale de la température. Le graphique 40 comporte en abscisse la distance en mm mesurée sur le plan de contact de la plaque collectrice 8 avec la dernière cellule, suivant la coupe transversale, et en ordonnée la température de ce plan. On constate que les perçages 22 se trouvent dans des zones chaudes qui peuvent atteindre 200°C, alors qu'entre les perçages la température est restée en dessous de 0°C.

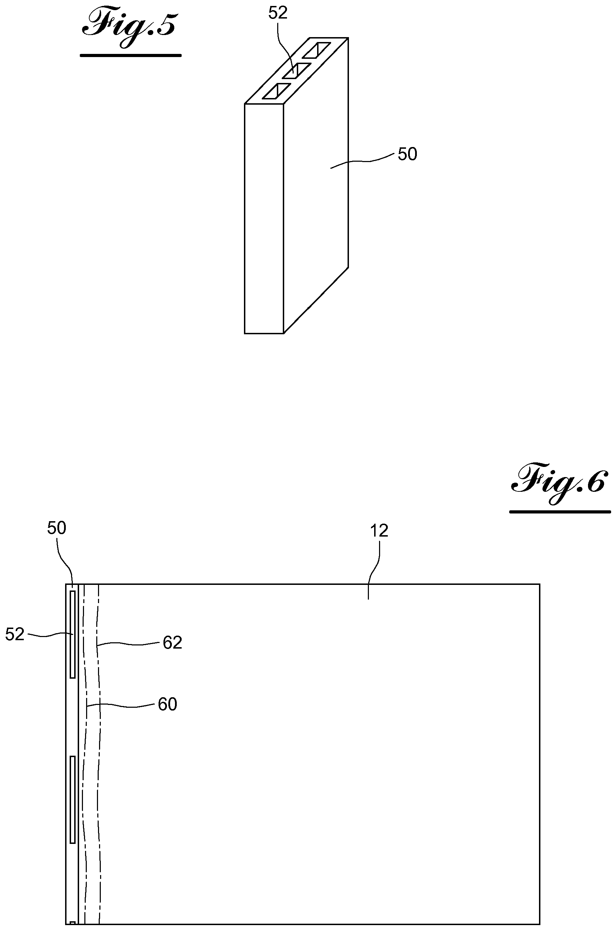

La figure 5 détaille une plaque collectrice 50 selon l'invention, comprenant dans son épaisseur qui est de 1mm, une succession de perçages 52 parallèles au plan de cette plaque, de section rectangulaire constante, qui sont disposés parallèlement entre eux, et traversent la plaque de part en part.

La section rectangulaire des perçages 52 comporte suivant l'épaisseur de la plaque collectrice 50, une hauteur égale au tiers de l'épaisseur, soit environ 0,3 à 0,4 mm, qui est centrée au milieu de cette plaque. La section rectangulaire comporte aussi une largeur de 7mm, qui est sensiblement égale à la distance entre deux de ces perçages. On obtient ainsi une réduction de matière de la plaque collectrice 50 et donc de sa masse et de sa capacité thermique, sans freiner de manière notable le passage du courant. On entend par capacité thermique de la plaque, la quantité de chaleur qui peut être stockée pour un volume de plaque donné.

La plaque collectrice 50 comporte aussi une borne de connexion centrale 10, non représentée, qui est similaire à celle présentée dans l'art antérieur.

Avantageusement, le volume des perçages 52 est supérieur à 10% du volume total de la plaque, pour obtenir une réduction substantielle de la capacité thermique de la plaque collectrice 50. On conçoit les perçages 52 de manière à obtenir une plaque collectrice 50 suffisamment homogène, avec une bonne répartition du courant électrique comme de la température. Pour cela, en pratique, on réalise au moins dix perçages dans la plaque collectrice 50.

La figure 6 présente une coupe transversale de la plaque collectrice 50 équipée de sa plaque de serrage 12 en polymère. La coupe est, effectuée dans un plan transversal aux perçages 52, une simulation de répartition de température a été effectuée dans des conditions équivalentes à celles présentées ci-dessus.

La pile à combustible 2 vient de démarrer depuis 20 secondes, à partir d'une température initiale de -20°C. On a tracé sur la coupe deux lignes d'isotempérature, une première ligne 60 à environ -10°C, et une deuxième ligne 62 à environ -18°C.

On constate que la température se répartit de manière sensiblement constante en regard des perçages 52 comme entre ces perçages. En particulier la face gauche de la plaque collectrice 50, en contact avec la dernière cellule, comporte une température sensiblement constante. Cette dernière cellule a alors un comportement thermique relativement uniforme sur toute sa surface, ce qui permet d'obtenir un fonctionnement et un rendement homogène de la cellule complète.

On peut obtenir ainsi une montée en température relativement homogène de la plaque collectrice 50, ainsi que de la dernière cellule qui lui est accolée, évitant des points froids restant en dessous de 0°C.

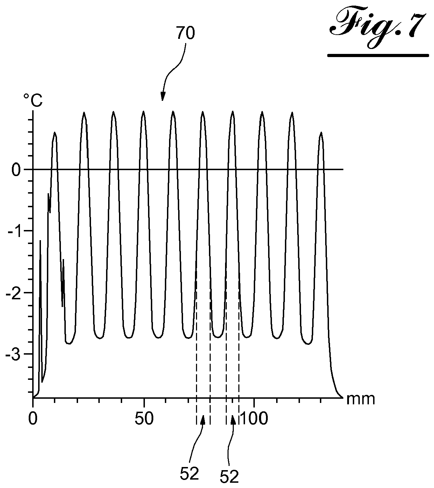

La figure 7 représente d'une autre manière sur le graphique 70, cette répartition de température sur le plan de contact de la plaque collectrice 50, avec la dernière cellule. Le graphique 70 comporte en abscisse la distance en mm mesurée sur le plan de contact de la plaque collectrice 8 avec la dernière cellule, suivant la coupe transversale, et en ordonnée la température de ce plan.

On constate que les perçages 52 se trouvent dans des zones un peu plus chaudes qui peuvent atteindre environ 1°C, alors qu'entre les perçages la température est d'environ -3°C, ce qui représente un faible écart de température.

La plaque collectrice 50 peut être avantageusement fabriquée par empilement dans l'épaisseur de plusieurs éléments. En particulier on peut superposer une plaque d'épaisseur mince et constante, sur une autre plaque comportant sur sa surface des évidements parallèles en forme de canaux, constituant après superposition les perçages 52, de manière à réaliser facilement ces perçages.

En variante, on peut réaliser différents types de perçages 52 dans l'épaisseur de la plaque collectrice 50. En particulier, les perçages 52 peuvent comporter des sections différentes, circulaires par exemple, et leurs répartitions peuvent être variées.

Pour le dessin des perçages 52, un compromis est à établir entre la réduction de la capacité thermique de la plaque collectrice 50, et l'augmentation de la résistance électrique de cette plaque, due au retrait du métal conducteur dans ces perçages.

De plus, le dessin de la plaque collectrice 50 sera réalisé pour obtenir une tenue mécanique satisfaisante de l'ensemble.

En pratique, un compromis satisfaisant a été trouvé pour une pile à combustible délivrant une densité de courant de 1A/cm², en réalisant des perçages 52 donnant pour la température nominale, comprise par exemple entre 20 et 80°C pour une pile à combustible à électrolyte solide polymère, et en particulier entre 60 et 80°C pour des applications véhicule, une chute de tension entre la borne de connexion 10 et un point quelconque éloigné de cette borne, qui est au maximum de 0,1V.

Dans ce cas, par exemple pour une pile à combustible délivrant une tension totale de 50V, la perte pour les deux plaques collectrices d'extrémité 50 sera au maximum de 0,2V pour les points les plus éloignés, ce qui représente moins de 0,4% de la tension totale.

Ce calcul peut se faire avantageusement avec un modèle numérique 3D basé sur la méthode des éléments finis (en utilisant par exemple des logiciels tels que Comsol Multiphysics ou FreeFem), qui simule la conduction électrique dans les matériaux avec des conditions stationnaires, en appliquant une condition aux limites de densité de courant de 1A/cm² sur la face en contact avec la plaque monopolaire, et en appliquant une condition aux limites de 0V sur la surface externe de la borne de connexion.

Pour cette simulation on réalise un maillage de la plaque collectrice 50, en faisant varier le nombre de perçages 52, leur section et l'emplacement de ces perçages, pour maximiser le volume de matière retiré tout en limitant la chute de tension en tous points, par exemple à un plafond de 0,1V. Les exemples de perçages indiqués ci-dessus, ont été réalisés avec cette méthode de simulation.

La pile à combustible suivant l'invention peut servir avantageusement pour un véhicule automobile, mais aussi pour toutes applications stationnaires comme un groupe électrogène, dans lesquelles on recherche une montée en température rapide.

## Revendications

1. - Pile à combustible (2) comprenant un empilement de cellules, deux plaques collectrices de courant (50) disposées de part et d'autre dudit empilement de cellules, deux plaques de serrage isolantes (12) disposées de part et d'autre dudit empilement de cellules et des plaques collectrices (50) et soumises à un serrage axial pour serrer l'empilement des cellules ; chacune desdites plaques collectrices de courant (50) étant monopolaire et comportant suivant l'axe d'empilement des cellules, une épaisseur sensiblement constante d'un matériau électriquement conducteur, formant un plan qui vient à l'extrémité de cet empilement pour collecter le courant de la pile à combustible, **caractérisée en ce que** chacune desdites plaques collectrices comporte des perçages (52) réalisés dans l'épaisseur du matériau, parallèlement au plan de ladite plaque, et **en ce que** lesdits perçages ont une section rectangulaire qui comporte, suivant l'épaisseur de ladite plaque collectrice (50), une hauteur représentant 30 à 40% de l'épaisseur de ladite plaque collectrice (50).

2. - Pile à combustible (2) selon la revendication précédente, **caractérisée en ce que** la plaque collectrice (1) a une épaisseur de 1 mm.

3. - Pile à combustible (2) suivant l'une des revendications précédentes, **caractérisée en ce que** les perçages (52) sont parallèles entre eux.

4. - Pile à combustible (2) suivant l'une des revendications précédentes, **caractérisée en ce que** les perçages (52) traversent la plaque (50) dans son épaisseur de part en part.

5. - Pile à combustible (2) suivant l'une des revendications précédentes, **caractérisée en ce qu'**elle comporte au moins dix perçages (52) parallèles.

6. - Pile à combustible (2) suivant l'une quelconque des revendications précédentes, **caractérisée en ce que** les perçages (52) comportent une section rectangulaire sensiblement constante.

7. - Pile à combustible (2) suivant la revendication précédente, **caractérisée en ce que** la section rectangulaire constante des perçages (52), comporte suivant l'épaisseur de la plaque (50), une hauteur représentant environ 30 à 40% de cette épaisseur, et **en ce que** la largeur de ces perçages est sensiblement égale à la distance entre deux perçages.

8. - Pile à combustible (2) suivant l'une quelconque des revendications précédentes, **caractérisée en ce qu'**elle comprend un empilement dans l'épaisseur de plusieurs éléments, certains éléments comportant sur sa surface des évidements en forme de canaux, constituant les perçages (52) après superposition.

9. - Pile à combustible (2) suivant l'une quelconque des revendications précédentes, **caractérisée en ce qu'**elle comporte une borne de connexion centrale (10) formant un axe perpendiculaire à cette plaque (50).

10. - Véhicule électrique comprenant une pile à combustible (2) délivrant un courant électrique utilisé pour la traction, **caractérisé en ce que** cette pile à combustible est réalisée suivant l'une quelconque des revendications précédentes.

11. - Groupe électrogène comprenant une pile à combustible (2) délivrant un courant électrique, **caractérisé en ce que** cette pile à combustible est réalisée suivant l'une quelconque des revendications 1 à 9.

## Patentansprüche

1. Brennstoffzelle (2), die eine Stapelung von Zellen, zwei Stromsammelplatten (50), die auf jeweils einer Seite der Stapelung von Zellen angeordnet sind, zwei isolierende Spanplatten (12), die auf jeweils einer Seite der Stapelung von Zellen und der Sammelplatten (50) angeordnet und einem axialen Spannenden unterworfen sind, um die Stapelung von Zellen zu spannen, umfasst, wobei jede der Stromsammelplatten (50) einpolig ist und entlang der Stapelungsachse der Zellen eine im Wesentlichen konstante Stärke eines elektrisch leitenden Werkstoffs umfasst, der eine Ebene bildet, die an das Ende dieser Stapelung kommt, um den Strom der Brennstoffzelle zu sammeln, **dadurch gekennzeichnet, dass** jede der Sammelplatten Bohrungen (52) umfasst, die in der Stärke des Werkstoffs parallel zu der Ebene der Platte ausgeführt sind, und dass die Bohrungen einen rechteckigen Querschnitt haben, der entlang der Stärke der Sammelplatte (50) eine Höhe umfasst, die etwa 30 bis 40 % der Stärke der Sammelplatte (50) ausmacht.

2. Brennstoffzelle (2) nach dem vorhergehenden Anspruch, **dadurch gekennzeichnet, dass** die Sammelplatte (1) eine Stärke von 1 mm hat.

3. Brennstoffzelle (2) nach einem der vorhergehenden Ansprüche, **dadurch gekennzeichnet, dass** die Bohrungen (52) zueinander parallel sind.

4. Brennstoffzelle (2) nach einem der vorhergehenden Ansprüche, **dadurch gekennzeichnet, dass** die Bohrungen (52) die Platte (50) in ihrer Stärke von einer Seite zur anderen durchqueren.

5. Brennstoffzelle (2) nach einem der vorhergehenden Ansprüche, **dadurch gekennzeichnet, dass** sie mindestens zehn parallele Bohrungen (52) umfasst.

6. Brennstoffzelle (2) nach einem der vorhergehenden Ansprüche, **dadurch gekennzeichnet, dass** die Bohrungen (52) einen rechteckigen Querschnitt, der im Wesentlichen konstant ist, umfassen.

7. Brennstoffzelle (2) nach dem vorhergehenden Anspruch, **dadurch gekennzeichnet, dass** der konstante rechteckige Querschnitt der Bohrungen (52) entlang der Stärke der Platte (50) eine Höhe umfasst, die etwa 30 bis 40 % dieser Stärke ausmacht, und dass die Breite dieser Bohrungen im Wesentlichen gleich einem Abstand zwischen zwei Bohrungen ist.

8. Brennstoffzelle (2) nach einem der vorhergehenden Ansprüche, **dadurch gekennzeichnet, dass** sie eine Stapelung in der Stärke mehrerer Elemente umfasst, wobei bestimmte Elemente auf ihrer Fläche Aussparungen in Kanalform umfassen, die nach Überlagerung die Bohrungen (52) bilden.

9. Brennstoffzelle (2) nach einem der vorhergehenden Ansprüche, **dadurch gekennzeichnet, dass** sie eine zentrale Anschlussklemme (10) umfasst, die eine Achse senkrecht zu dieser Platte (50) bildet.

10. Elektrofahrzeug, das eine Brennstoffzelle (2) umfasst, die einen elektrischen Strom liefert, der zur Traktion verwendet wird, **dadurch gekennzeichnet, dass** diese Brennstoffzelle gemäß einem der vorhergehenden Ansprüche hergestellt ist.

11. Stromaggregat, das eine Brennstoffzelle (2) umfasst, die einen elektrischen Strom liefert, **dadurch gekennzeichnet, dass** diese Brennstoffzelle gemäß einem der Ansprüche 1 bis 9 hergestellt ist.

## Claims

1. A fuel cell (2) including a stack of cells, two current collecting plates (50) disposed on either side of said stack of cells, two insulating clamping plates (12) disposed on either side of said stack of cells and collecting plates (50) and subjected to an axial clamping for clamping the stack of the cells; each of said current collecting plates (50) being monopolar and comprising according to the stacking axis of the cells a substantially constant thickness of an electrically conductive material, forming a plane which comes to the end of this stack for collecting the current of the fuel cell, **characterized in that** each of said collecting plates comprises bores (52) formed in the thickness of the material, parallel to the plane of said plate, and **in that** said bores have a rectangular section which comprises, along the thickness of said collecting plate (50), a height representing 30 to 40 % of the thickness of said collecting plate (50).

2. The fuel cell (2) according to the preceding claim, **characterized in that** the collecting plate (1) has a thickness of 1 mm.

3. The fuel cell (2) according to one of the preceding claims, **characterized in that** the bores (52) are parallel to one another.

4. The fuel cell (2) according to one of the preceding claims, **characterized in that** the bores (52) pass through the plate (50) in its thickness from one side to the other.

5. The fuel cell (2) according to one of the preceding claims, **characterized in that** it comprises at least ten parallel bores (52).

6. The fuel cell (2) according to any one of the preceding claims, **characterized in that** the bores (52) comprise a substantially constant rectangular section.

7. The fuel cell (2) according to the preceding claim, **characterized in that** the constant rectangular section of the bores (52) comprises along the thickness of the plate (50) a height representing approximately 30 to 40 % of this thickness, and **in that** the width of these bores is substantially equal to the distance between two bores.

8. The fuel cell (2) according to any one of the preceding claims, **characterized in that** it includes a stack in the thickness of a plurality of elements, certain elements comprising on its surface openings in the form of channels, constituting the bores (52) after superposition.

9. The fuel cell (2) according to any one of the preceding claims, **characterized in that** it comprises a central connection terminal (10) forming an axis perpendicular to this plate (50).

10. An electric vehicle including a fuel cell (2) delivering an electric current used for traction, **characterized in that** this fuel cell is realized according to any one of the preceding claims.

11. An electricity-generating group including a fuel cell (2) delivering an electric current, **characterized in that** this fuel cell is realized according to any one of claims 1 to 9.
